# EUROPEAN PATENT SPECIFICATION

(11) **EP 0 723 031 B1**
(45) Date of publication and mention of the grant of the patent: **15.04.1998**
(21) Application number: 96100557.6
(22) Date of filing: 16.01.1996
(51) Int. Cl.: C22C 45/00, B22F 3/087, B22F 3/00

(54) **High-density bulky body of amorphous alloy excellent in strength and magnetic property and joining method for manufacturing thereof**
Sinterkörper mit hoher Dichte aus einer Amorph-Legierung mit hoher Festigkeit und magnetischen Eigenschaften und Verbindungsverfahren zu dessen Herstellung
Corps fritté à haute densité élévée d'une alliage amorphes avec une haute résistance mécanique et d'excellentes propriétés magnétiques, et procédé de liaison pour sa production

(30) Priority: 17.01.1995 JP 22288/95; 20.10.1995 JP 297342/95
(43) Date of publication of application: 24.07.1996
(73) Proprietor: NISSHIN STEEL CO., LTD., Chiyoda-ku Tokyo 100 (JP); Okazaki, Kenji, Nicholasville, Kentucky 40356 (US)
(72) Inventor: Saida, Junji, c/o Steel & Tech. Dev. Lab., Ichikawa-shi, Chiba-ken 272 (JP); Tanaka, Yosuke, c/o Steel & Tech. Dev. Lab., Ichikawa-shi, Chiba-ken 272 (JP); Tanaka, Yasuji, c/o Steel & Tech. Dev. Lab., Ichikawa-shi, Chiba-ken 272 (JP); Matsumoto, Ayako, c/o Steel & Tech. Dev. Lab., Ichikawa-shi, Chiba-ken 272 (JP)
(74) Representative: Müller-Boré & Partner Patentanwälte

(56) References cited:
- EP-A- 0 464 275
- US-A- 4 929 415
- DISS. ABSTR. INT. , vol. 49, no. 3, September 1988, UNIVERSITY OF TEXAS, page 879B XP000569891 KIM, Y.-W.: "Consolidation of metallic glass ribbons and powder using a pulsed high current discharge"
- SCRIPTA METALLURGICA ET MATERIALIA, vol. 24, no. 6, June 1990, pages 1137-1142, XP000569900 HUANG,D.-R., LI,J.C.M.: "Stress relief of amorphous Fe78B13Si9 ribbon by rapid joule heating"
- MATERIALS SCIENCE AND ENGINEERING A. CONFERENCE:SEVENTH INTERNATIONAL CONFERENCE ON RAPIDLY QUENCHED MATERIALS, 13-17/8/90. , vol. a133, 15 March 1991, STOCKHOLM, SWEDEN, pages 209-212, XP000569936 HUANG, D.-R., LI, J.C.M.: "High frequency magnetic properties of an amorphous Fe78B13Si9 ribbon improved by AC joule heating."
- Kim, Y.W., "Consolidation of Metallic Glass Ribbons Using Electric Discharge Welding", Met. Trans. A, Vol. 19A, June 1988, pages 1634-1638.

## Description

The present invention is related to a new joining method for manufacturing an amorphous alloy bulk with high density.

An amorphous alloy has been prepared by liquid-quenching, vapor deposition and solid-state reaction, since an ordinary casting method cannot ally to the production of such an amorphous alloy because of its low cooling rate. Due to the restriction of producing method, the form of an obtained amorphous alloy is limited to ribbon, thin film or powder. The amorphous alloy ribbon is most available for practical use, which is used as the cores by coiling and transformers by laminating. In these cases, packing or lamination factor is very low comparing with that of the conventional Si-steel transformer, for example. So many studies on the preparing amorphous alloy bulks have been carried out, especially, by sintering the amorphous powders and bonding the amorphous ribbons.

According to the sintering method, the amorphous alloy powders are sintered under a high pressure at a temperature below its crystallization temperature. Using ordinary sintering process, the pressing temperature is relatively high (1000-1500°C) to obtain the bulky body in order to give a rise to the plastic deformation of powders sufficiently and the thermal diffusion of constituting elements effectively. However, crystallization will occur in the sintering of amorphous powders at such as high pressing temperature. Consequently, amorphous alloy compacts prepared by sinterring do not have high relative density and their physical properties will be deteriorated comparing with those of amorphous ribbon. So the sintering temperature has been inevitably held at a lower level, therefore it is impossible to obtain a sintered body with high density and good physical properties.

On the other hand, the method of bonding amorphous alloy ribbons has the problem on a temperature during bonding in order to acheive the good connect among ribbons. In general, it is very difficult to bond amorphous alloy ribbons at the temperatures below crystallization temperature, and a bulky body obtained by the low-temperature bonding does not have sufficient strength. However, if the bonding temperature is higher than crystallization temperature, the crystallization will occur, which brings the harmful influence on the physical property of an obtained bulky body. In this consequence, amorphous alloy ribbons cannot be joined remaining the amorphous phase without using adhesive such as resin. The bulk body obtained in this way has lower relative density insufficiently to satisfy the various requisitions for industrial use.

For instance, the relative density (packing or lamination factor) of the body prepared by resin-bonding is approximately 80%, so that it does not satisfy the needs for small-sized parts. It is the same as the case when amorphous ribbons are pressed under high pressure. The compact amorphous alloy ribbons, which are pressed under high pressure at temperatures below crystallization temperature, can be improved its relative density. However, they have extremely low mechanical strength and it is impossible to produce the pressed amorphous alloy ribbons with the thickness above 0.2 mm due to their poor mechanical properties.

There are lots of problems in either the sintering method or the bonding method, as afore-mentioned. Especially as the good magnetic and mechanic properties of amorphous alloy spoil drastically with crystallization except crystallline size being nano-meter order, it is difficult to produce the amorphous alloy bulk with high density which satisfies industrial demands.

In order to obtain a nanocrystalline alloy with good magnetic property, an amorphous alloy is usually used as starting material. In this case, it is difficult to obtain the nanocrystallline alloy bulk which is available for industrial use, since the precipitation temperature of nanocrystalline is relatively lower than pressing or sintering temperature, while the precipitation conditions are different from the sintering or bonding conditions.

However, the needs for high-functional material have recently become stronger and stronger. It is the same as the case of a bulky amorphous or nanocrystalline alloy. In short, it is the strong demand to offer bulky amorphous or nanocrystalline alloy improved in their properties.

The object of the present invention is to provide a new joining method for manufacturing a bulky body of amorphous or nanocrystalline alloy with high density, excellent magnetic and mechanical properties.

The bulky body of an amorphous alloy can be provided by joining the laminated amorphous alloy ribbons one another through the melted parts which exists uniformly across the lamination boundaries, while oxide films remain at the lamination boundaries other than said melted parts. Annealing the such joined amorphous body under the suitable conditions, nanocrystalline can be precipitated.

Said bulky body is produced by the joining method according to the present invention whereby an alternating current is applied to the stack of amorphous alloy ribbons held in a pressed state with a pressure of 30 MPa or higher at least once under the conditions of the maximum current density 1-100 kA/cm², the frequency of 1 kHz or more and the current-supplying time of from 50 micro-seconds to 500 milli-seconds in total.

The amorphous alloy ribbon contains 40-90 at.% Fe, 50-90 at.% Co or 80-90 at.% A1.

Fig. 1 is an optical micrograph showing the cross section of a bulky body obtained in Example 1.

Fig. 2 is an optical micrograph showing the cross section of the body prepared by coiling amorphous alloy ribbon. This body is available on the market.

Fig. 3A is a secondary electron beam image analized by EPMA for a bulky body obtained in Example 1.

Fig. 3B is an oxygen characteristic X-ray image analized by EPMA for the same body obtained in Example 1.

Fig. 4 is a schematic illustration of the cross sectional structure of the same body obtained in Example 1.

Fig. 5 is a graph showing the effect of the thickness on the relative density of the bulky body obtained in Example 2.

Fig. 6 is a graph showing the effect of the thickness on the coercive force of the bulky body obtained in Example 3.

Fig. 7 is a graph showing the effect of the thickness on the D.C. saturation magnetization of the same body obtained in Example 3.

Fig. 8 is a graph showing the effect of the thickness on the core loss per unit volume of the same body obtained in Example 3.

Fig. 9 is a graph showing the effect of the thickness on the tensile strength of the bulk body obtained in Example 4.

Fig. 10 is a graph showing the effect of the thickness on the core loss per unit volume of the bonded body obtained in Example 5.

Fig. 11 is a graph showing the effect of the maximum current density on the relative density of a bulky body prepared by joining amorphous alloy ribbons by the supply of a high-frequency current.

Fig. 12 is a graph showing the effect of frequency on the relative density of a bulky body prepared by joining amorphous alloy ribbons under the same conditions.

Fig. 13 is a graph showing the effect of the total current-supply time on the relative density of a bulky body prepared by joining amorphous alloy ribbons under the same conditions.

Fig. 14 is a graph showing the effect of applied pressure on the relative density of a bulky body prepared by joining amorphous alloy ribbons under the same conditions.

We have found the phenomena that amorphous alloy ribbons are joined one another without crystallization caused by thermal hysteresis, when a high-frequency current is supplied to the amorphous alloy ribbons with high current density and high potential for a short time. One of the inventors discovered that the application of said high current density for a short time, 10-500 microseconds, itself is useful for the sintering of powder material, as disclosed in U.S.-A-4 929 415 (corresponding to Japanese Patent Application Laid Open 2-125802). However, when such high-frequency current with high current density is applied to the amorphous alloy ribbons, the inputted energy is effectively used for joining the ribbons, and then the bulky body which has peculiar structure is obtained.

The surface of the amorphous alloy ribbon softens by the heating with controlled current density, frequency and current-supplying time within the ranges defined by the present invention. The controlled conditions causes the skin effect which allows the flow of electric current only through the surface of the ribbons, so that the surface is heated at a high temperature and then it has plasticity for densifying, but the interiors of the ribbons are kept at a low temperature.

The surface of the ribbons has larger electric resistance due to the contact resistance and oxide films, and the partial electric resistance is different from each other due to the minutely rugged surface of the ribbons as well as the unevenness of the oxide films. Therefore, the surface of the ribbons is partially heated up to a high temperature at the parts where the electric resistance is relatively higher, so as to form the melted parts uniformly across the lamination boundaries. Since the pressure is applied onto the ribbons while its surface has a plasticity, the laminated ribbons are densified without thermal affection.

The joined body obtained in this way has the lamination boundaries partially except the melted parts, while oxide films remain at the lamination boundaries other than the melted parts. The melted parts are heated and quenched rapidly, so they have the amorphous structure. Therefore, the ribbons still keep their original amorphous structure at the both of the interior and the surface. The bulky body obtained in this way has relative density improved. The relative density of the bulky body is remarkably enhanced by controlling the pressure above 30 MPa.

Due to this peculiar structure, the joined body has high bonding strength and the magnetic properties. The density of the joined body is also high. When the joined body is annealed under the suitable conditions, nanocrystalline phase is precipitated without deteriorating the excellent properties. Consequently, parts made from the bulky body exhibit the excellent properties which have not been noted as for an amorphous or nanocrystalline alloy having ordinary structure.

The amorphous alloy ribbons are inserted in a die made of dielectric material and joined together by supplying an alternative current having a predetermined high-frequency under the pressed state. When the frequency of the supplied current is 1 kHz or more, there occurs the skin effect to allow the flow of electric current mainly through the surface of the ribbons.

In order to promote the sufficient diffusion bonding, the maximum current density shall be controlled within the range of 1-100 kA/cm²_{.} If the maximum current density is below 1 kA/cm², the surface layers of the amorphous alloy ribbons would be merely heated up to a relatively lower temperature due to insuffient Joule heat, resulting in poor bonding strength. If the maximum current density exceeds 100 kA/cm², the amorphous alloy ribbons would be heated at an excessively high temperature easy to facilitate crystallization reaction, resulting in the deterioration of physical property.

The partial melting of the ribbons by discharging is terminated in a very short time, while the other parts of the ribbons except the melted parts, which have low resitance, play a role of a heat sink. As a result, the amorphous structure of the ribbons can be maintained not only at the interior but also at the other lamination boundaries. The amorphous structure is not substantially destroyed even at the melted part, since the material is rapidly quenched after discharging.

In the joining method according to the present invention, different from the conventional methods whereby amorphous ribbons are uniformly heated and bonded together, the surface layers and the peripheries of the amorphous alloy ribbons are concentratedly heated, while the interiors of the amorphous alloy ribbons are not substantially heated at all. Consequently, the heat generated by the current supply is efficiently consumed for the joining of the amorphous alloy ribbons.

The effective use of the heat enables to predetermine the total current-supplying time within a very short period of from 50 micro-seconds to 500 milli-seconds, so that the deterioration of the amorphous structure can be surely inhibited. If the total current -supply time does not reach 50 micro-seconds, the sufficient heat necessary for the joining would not be generated. If the total current -supply time is longer than 500 milli-seconds, crystallization would occur.

Generally, it is known that amorphous ribbons are covered with thin oxide film. According to the present invention, this oxide film in the joined part is destroyed by discharging, since they are heated up at the temperatures which the oxide film is decomposed. The destruction of the oxide films is detected by the absence of oxide in the joined parts by Electron Probe X-Ray Micro Analysis (EPMA). As a result, the joining reaction is accelerated to enhance the bonding strength for the bulky body.

The obtained bulky body has high relative density and high destructive strength. The reduction of the electric resistance among the ribbons is very small, since oxide films remains at the lamination boundaries other than the joined parts. Due to this peculiar structure, the adjacent ribbons are electrically connected together only through the joined parts, but substantially insulated from each other by the remaining oxide films at the lamination boundaries other than the joined parts.

This structure gives various properties which has not been noted in conventional bonded bodies.

As for the application to the magnetic device which is the biggest industrial use of amorphous material, the bulky body has the same D.C. magnetic property as that of the amorphous alloy ribbon as the starting material, and high-frequency magnetic property such as core loss approximately similar to that of the amorphous alloy ribbon.

The relative density of the bulky body is higher by 15-20 % than a conventional coiled body, so that the magnetic property per unit volume is improved by 15-20%. Consequently, magnetic parts for use in various fields can be made smaller in size.

The restrictions on the size, thickness or the like of the joined body are remarkably removed, as compared with a conventional hot pressed consolidated body. Therefore, the joined body can be used as big-sized magnetic parts such as power transformers.

The amorphous alloy ribbons to be joined are the materials having electric conductivity, and there is not any special restrictions on the shape of the ribbon. The electric resistance among the ribbons to be joined is preferable to 10m Q or more in order to generate a sufficient amount of heat which is necessary for joining. When the electric resistance is extremely lower, proper means may be applied to enhance the electric resistance. For instance, material such as ceramics having high electric resistance may be inserted between the amorphous alloy ribbons, or a thin film having high electric resistance may be formed on the surface of the amorphous alloy ribbon.

The amorphous alloy preferably contains 40-90 at.% Fe, 50-90 at.% Co or 80-90 at.% Al, as shown in Examples under-mentioned. The open atmosphere may be used as a joining atmosphere. However, an inert or vacuum atmosphere is also effective to prevent the joined parts from oxidizing.

An apparatus which is useful for the supply of a high-frequency current may be the high-frequency current generator capable of outputting predetermined electric power. In order to supply a high-frequency current with high voltage in a short time, discharging from capacitor can be used, for instance.

### Example 1:

Amorphous alloy ribbons of 25 µm in thickness having the compositions of Fe₇₈Si₉B₁₃ were used in this Example. The ribbons were cut to square shapes having the dimensions of 10mm × 10mm. 100 pieces of the them were piled up in a dielectric die held in the open atmosphere and joined together under the conditions shown in Table 1.

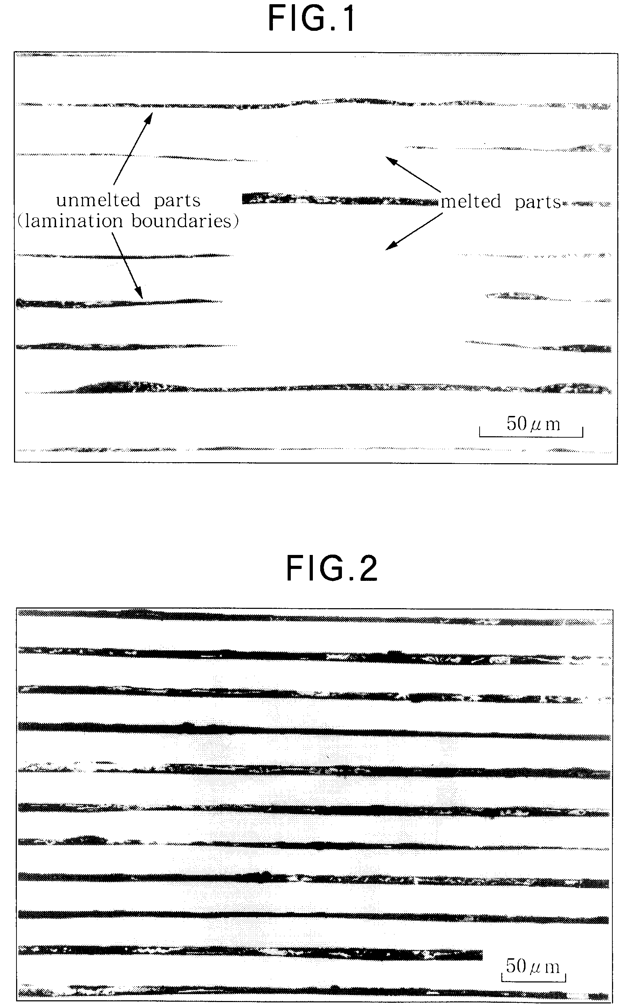

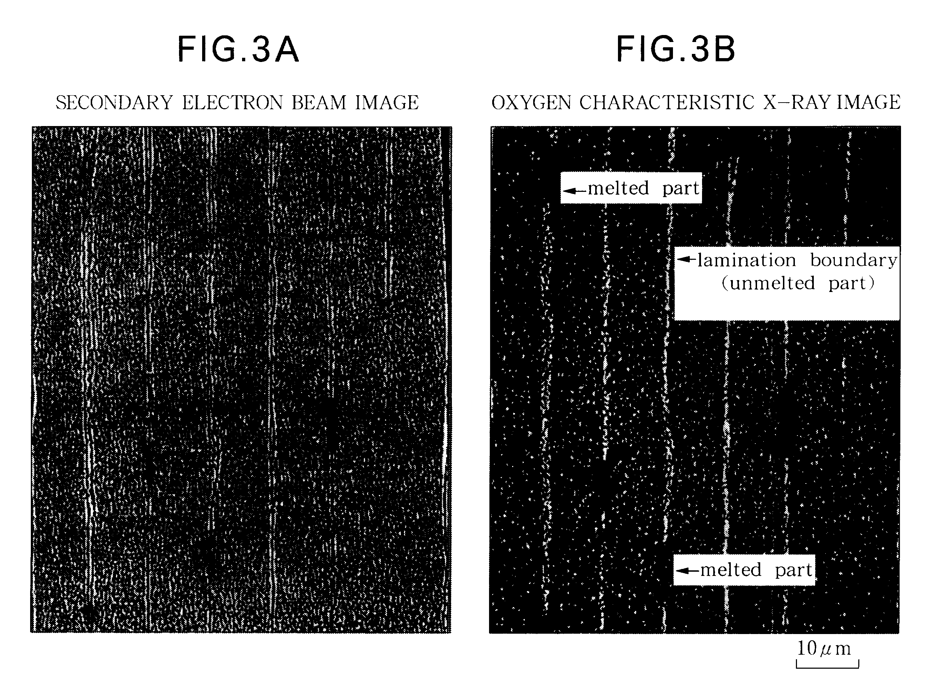

The cross section of the joined body obtained in this way was observed by an optical microscope. It was noted that adjacent ribbons were joined together through the melted parts wich exists uniformly across lamination boundaries, as shown in Fig. 1. While, the remaining of oxide films was noted at the lamination boundaries other than the melted parts. On the other hand, a conventional coiled troidal core on the market had continuous oxide layers and a lot of vacancy at the lamination boundaries, as shown in Fig. 2.

**Table 1:**

| CONDITIONS FOR BONDING AMORPHOUS ALLOY THIN FOILS | | | |
|---|---|---|---|
| MAX. CURRENT DENSITY | FREQUENCY | CURRENT APPLY TIME | PRESSURE |
| 10 kA/cm² | 10 KHz | 500 µ seconds | 30 MPa |

It was noted that the amorphous sutrucure was maintained even after joining by various X-ray difraction, microscopic ovservation and thermal analysis. The amorphous structure was maintained even at the joined part.

The joined body obtained in this example had the sectional structure (shown in Fig. 1) quite different from the sectional structure (shown in Fig. 2) of a conventional body. It is noted from said sectional structure that the joined body had high-density since vacancies between ribbons were remarkably reduced. As the result of measurement, the relative density of the joined body was 97%. It is also understood from the sectional structure shown in Fig. 1 that the reduction of electric resistance is very small, because of the low volume of joined part comparing with that of unjoined parts, resulting in excellent high-frequency magnetic property such as core loss.

Figs. 3A and 3B show the result of EPMA analysis on the cross section of the joined body. By the comparison of a secondary electron beam image (Fig. 3A) with an oxygen characteristic X-ray image (Fig. 3B), it is noted that oxygen concentration at the joined part where the lamination boundary was eliminated was distinctly reduced as compared with oxygen concentration at the unjoined part. The reduction of the oxygen concentration means that the adjacent ribbons were joined together at the melted parts with removing oxide films from the interface of the ribbons.

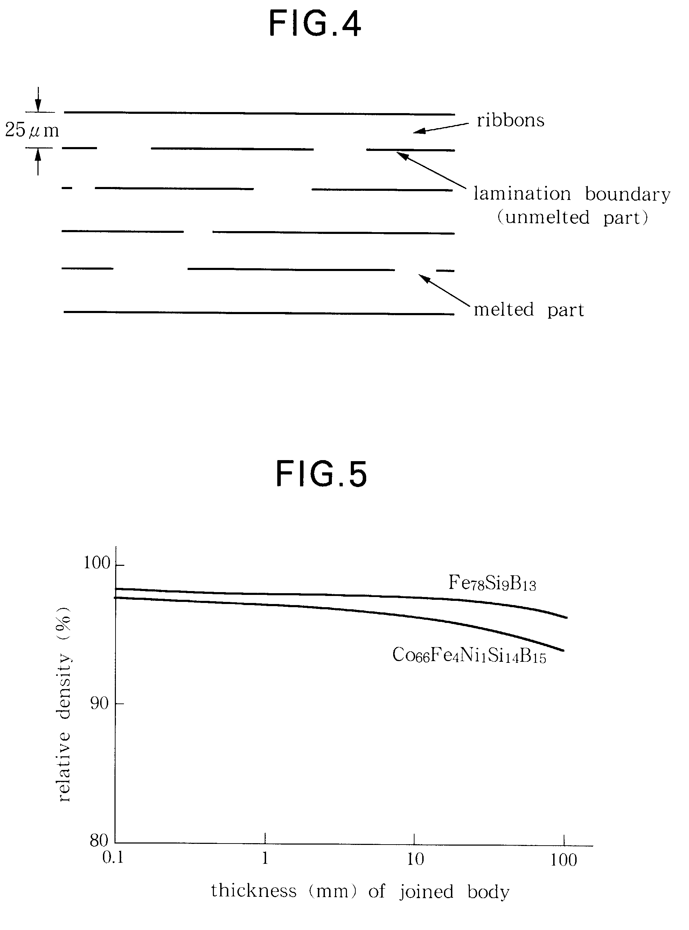

The cross section of the joined body is schematically illustrated in Fig. 4 on the basis of the newly found phenomena as afore-mentioned. The structure of the joined body has the feature that the adjacent ribbons are joined together through the melted parts, while the oxide films remain between the ribbons at the other non-melted parts. The interlayer vacancies are much thinner as those of a conventional body. This unique structure probably brings the high density, high strength and excellent magnetic property.

### Example 2:

Amorphous alloy ribbons of 25 µm in thickness having the compositions of Fe₇₈Si₉B₁₃ (at.%) and Co₆₆Fe₄Ni₁Si₁₄B₁₅ (at. %) were sheared to square shapes having the dimensions of 10 mm × 10 mm and joined under the same conditions as those in Example 1. In this Example 2, the number of ribbons to be piled up was varied to search the effect of thickness on the relative density of the joined body.

The results are shown in Fig. 5. It is noted that the relative density was scarcely lowered even when the joined body was getting thicker. The cross section of the joined body kept the amorphous structure as shown in Fig. 1 independent of thickness. In the example 2, joined bodies can be produced up to 100mm thick, so as to confirm the production of amorphous joined bodies having high relative density.

### Example 3:

Amorphous alloy ribbons of 25 µm in thickness having the compositions of Fe₇₈Si₉B₁₃ (atom. %) and Co₆₆Fe₄Ni₁Si₁₄B₁₅ (atom. %) were formed to a ring-shape, piled up and joined under the same conditions as those in Example 1.

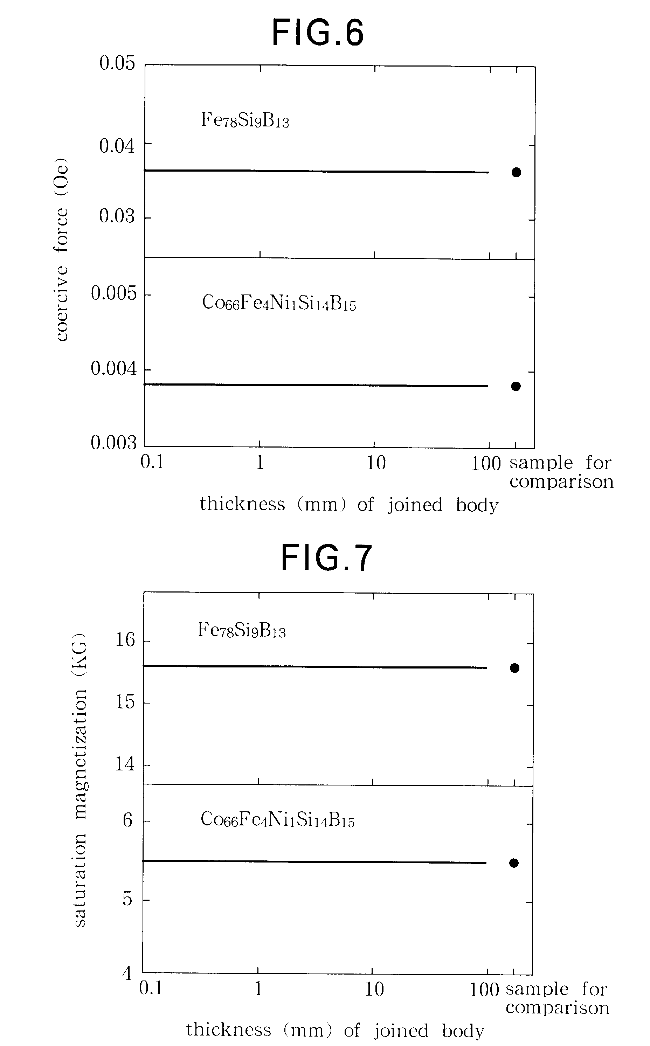

D.C. magnetic properties such as coercive force and saturation magnetization of each joined body were examined. The results were arranged in the relation with the thickness of the joined body, and shown in Fig. 6 and Fig. 7, respectively. In Figs. 6 and 7, a coiled body which is available on the market was used as a sample for comparison. It is noted that the joined bodies had the constant values of coercive force and saturation magnetization independent of the thickness. Consequently, it is understood that the joined bodies exhibit excellent D.C. magnetic properties.

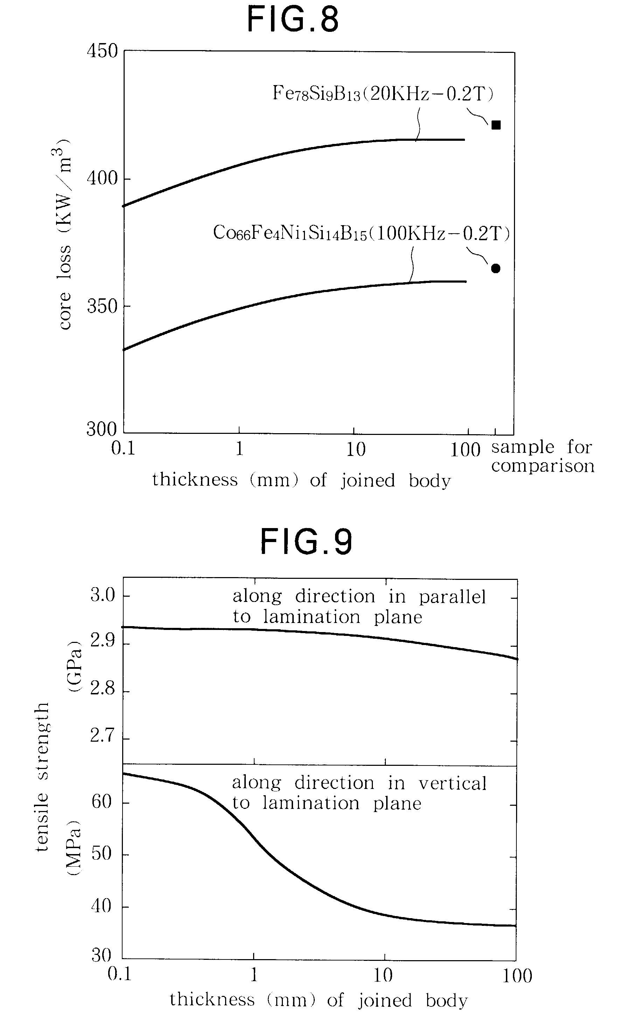

Core loss per unit volume was investigated in the relation with the thickness of the joined body. As the results are shown in Fig. 8, the increase of core loss was hardly recognized even when the joined body was getting thicker. This increase of core loss is due to the decrease of its electric resistance. A coiled body which is available on the market was used as a comparative sample in Fig. 8. It is understood from these results that the joined bodies obtained in Example 3 exhibit excellent high-frequency magnetic properties.

### Example 4:

Amorphous alloy ribbons having the dimensions of 25 µm in thickness, 5 mm in width and 50 mm in length and the composition of Fe₇₈Si₉B₁₃ (at. %) were joined under the same conditions as those in Example 1. The joined bodies obtained in this Example were offered to tensile tests, to search tensile strengthes along a direction in prallel to the lamination plane and a direction vertical to the lamination plane. The value of the tensile strength along each direction was arranged in the relation with the thickness of the joined body. The results are shown in Fig. 9.

As shown in Fig. 9, the tensile strength along the direction in parallel to the lamination plane was similar to the tensile strength of the amorphous alloy ribbons as the starting material. Said tensile strength was scarcely changed even when the joined body was getting thicker. On the other hand, the tensile strength along the direction vertical to the lamination plane was approximately 30-50 MPa. This tensile strength had the tendency to become lower a little as the increase of the thickness of the joined body. However, the tensile strength along the direction vertical to the lamination plane was extremenly higher than that of a conventional hot pressed consolidated body. These results means that the joined body is excellent in mechanical strength.

### Example 5:

Amorphous alloy ribbons of 16 µm in thickness having the composition of Fe_{73. 5}Si_{13. 5}B₉Cu₁Nb₃ (at. %) were sheared to a ring-shape of 10 mm in outer diameter and 7 mm in inner diameter. The ring-shaped ribbons were laminated and joined under the same conditions as those in Example 1. Joined bodies with various thickness were obtained in this way. Each joined body was annealed at 550°C × 1 hr. in a vacuum atmosphere, so as to precipitate nanocrystalline phase with 10 nm grain size.

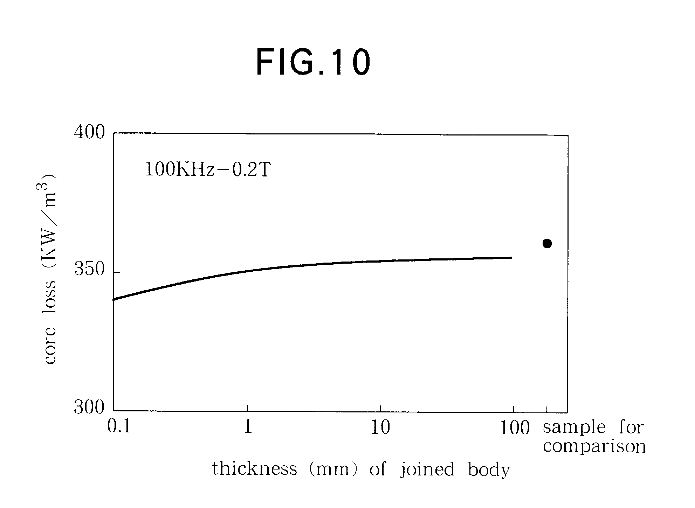

Core loss of the joined body after the heat treatment was examined. Core loss per unit volume was arranged in the relation with the thickness of the joined body. As the results are shown in Fig. 10, core loss of the joined bodies scarcely became larger even as the increase of the thickness. The bulky bodies obtained in this Example 5 exhibited excellent magnetic properties compared with a conventional body, even at any thickness. From these results, it is understood that the bulky body is excellent in high-frequency magnetic property as compared with the products by a conventional method such as coiling or laminating.

### Example 6:

Various kinds of amorphous alloy ribbons of 50 µm in thickness were sheared to square shape of the dimensions of 10mm×10mm. 100 pieces of the square-shape ribbons were piled up in a dielectric die held in the open atmosphere and joined together under the conditions shown in Table 2. The cases 1-8 belong to the present invention, while the cases 9-12 do not satisfy one or more conditions defined by the present invention.

The amorphous alloys used in this example were as follows (unit: atm. %):

| | | |
|---|---|---|
| Fe-base | Fe₉₀Zr₁₀ | Fe₇₅Si₁₀B₁₅ |
| | Fe₆₅Si₂₅B₁₀ | Fe₆₂Mo₂₀C₁₈ |
| | Fe₄₆Cr₁₆Mo₂₀C₁₈ | Fe₄₀Ni₄₀P₁₄B₆ |
| | Fe₄₀Ni₃₈Mo₄B₁₈ | Fe_{73.5}Si_{13.5}B₉Cu₁Nb₃ |
| Co-base | Co₉₀Zr₁₀ | Co₇₅Si₁₅B₁₀ |
| | Co₅₀Cr₃₀C₂₀ | Co_{70.5}Fe_{4.5}Si₁₀B₁₅ |
| | Co₆₆Fe₄Ni₁Si₁B₁₅ | |
| Al-base | Al₉₀Y₁₀ | Al₈₅Ni₅Y₁₀ |
| | Al₈₄Ni₁₀Ce₄Mg₂ | Al₈₅Zr₅Ni₁₀ |
| Ni-base | Ni₉₀Zr₁₀ | Ni₇₅Si₈B₁₇ |
| | Ni₆₄Pd₁₆P₂₀ | Ni₇₀Mo₂₀C₁₀ |
| Cu-base | Cu₆₀Zr₄₀ | Cu₅₀Ti₅₀ |
| Mo-base | Mo₇₅Si₅B₂₀ | Mo₈₀P₁₀B₁₀ |

**TABLE 2:**

| BONDING CONDITIONS OF AMORPHOUS ALLOY FOILS | | | | | |
|---|---|---|---|---|---|
| Case No. | Maximum Current Density kA/cm² | Frequency kHz | Current Supply Time | Pressure MPa | Note |
| 1 | 1 | 1 | 50 µs | 30 | Examples of The Present Invention |
| 2 | 8 | 3 | 50 µs | 30 | |
| 3 | 10 | 5 | 50 µs | 30 | |
| 4 | 10 | 10 | 500 µs | 30 | |
| 5 | 50 | 10 | 800 µs | 100 | |
| 6 | 50 | 100 | 1 ms | 200 | |
| 7 | 100 | 1 | 50 µs | 30 | |
| 8 | 100 | 1 | 500 ms | 30 | |
| 9 | 0.8 | 1 | 500 ms | 30 | Comparative Examples |
| 10 | 1 | 0.5 | 50 µs | 30 | |
| 11 | 1 | 1 | 30 µs | 30 | |
| 12 | 120 | 1 | 50 µs | 30 | |

The obtained bulky bodies were examined to research their amorphous states, the degrees of interlayer peelings and relative densities. The results are as follows:

In any of the cases 3-8, the bulky body obtained from any kind of the amorphous alloy ribbons had amorphous structure and relative density of 95% or more without the formation of interlayer peelings. The bulky body obtained in the case 1 or 2 had amorphous structure and relative density of 90-95% without the formation of interlayer peelings.

On the contrary, the bulky body obtained in any of the cases 9-12 had relative density below 90% or were crystallized.

It is apparently noted from this comparison that a amorphous bulky body having relative density of 90% or more can be obtained by joining amorphous alloy thin ribbons under the conditions defined by the present invention.

### Example 7:

A high-frequency current was supplied to each of the amorphous alloy ribbons of 25 µm in thickness having the compositions of Fe₇₅Si₁₀B₁₅ (at.%), Co_{72.5}Si_{12.5}B₁₅ (at.%) and Al₈₅Ni₅Y₁₀ (at.%), to obtain the bulky body wherein the ribbons were joined with each other. In this case, the pressure was held at the constant value of 300 MPa, the frequency was held at the constant value of 15 kHz, and the current-supply time was held at the constant value of 1 milli-seconds. The maximum current density was varied to search the effect of the maximum current density on the obtained bulky body.

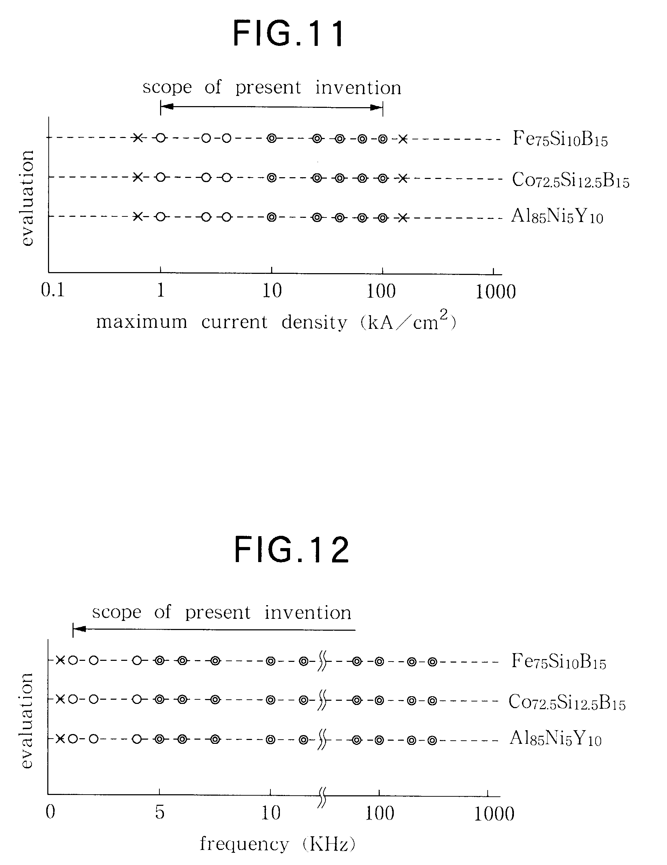

The effect of the maximum current density of the supplied high-frequency current on the relative density of the obtained bulky body was searched. Said effect is shown in Fig. 11, wherein the mark ⓞ represents the case when bulky body has amorphous structure, and the relative density of 95% or more without the formation of interlayer peelings, the mark ○ represents the case when the bulky body has amorphous structure, and the relative density of 90-95% without the formation of interlayer peelings, and the mark × represents the case when the bulky body has the relative density below 90% or the case when the obtained bulky body had partialy or completely crystallized structure.

It is noted from Fig. 11 that the relative density of the bulky body did not reach 90% when the high-frequency current was supplied with the maximum current density below 1 kA/cm². When the maximum current density of the supplied current exceeded 100 kA/cm², the obtained bulky body was crystallized. On the other hand, the bulky body obtained by supplying the high-frequency current with the maximum current density within the range of 1-100 kA/cm² had amorphous structure and the relative density of 95% or more without the formation of interlayer peelings.

### Example 8:

The same amorphous alloy ribbons as those in Example 7 were joined by the supply of high-frequency current with the maximum current density of 30 kA/cm², to obtain bulky bodies. In these cases, the pressure to be applied onto the ribbons as well as the current supply time were predetermined at the same levels as those in Example 7, while the frequency of the supplied current was varied to search the effect of the frequency on the relative density of the obtained bulky body.

The results are shown in Fig. 12, wherein the obtained bulky bodies were evaluated by the same way as that in Example 7. It is noted from Fig. 12 that the bulky body having high density was obtained when the current having the frequency of 1 kHz or more was supplied. Especially, when the frequency of the supplied current was 5 kHz or more, the obtained bulky body had relative density exceeding 95%.

### Example 9:

The same amorphous alloy ribbons as those in Example 7 were joined by supplying the high-frequency current having the frequency of 5 kHz with the maximum current density of 70 kA/cm² under the pressure of 500 MPa, to obtain a bulky body. In this example, the total current-supply time was varied within the range from 10 micro-seconds to 700 milli-seconds to search the effect of the total current-supply time on the relative density of the obtained bulky body.

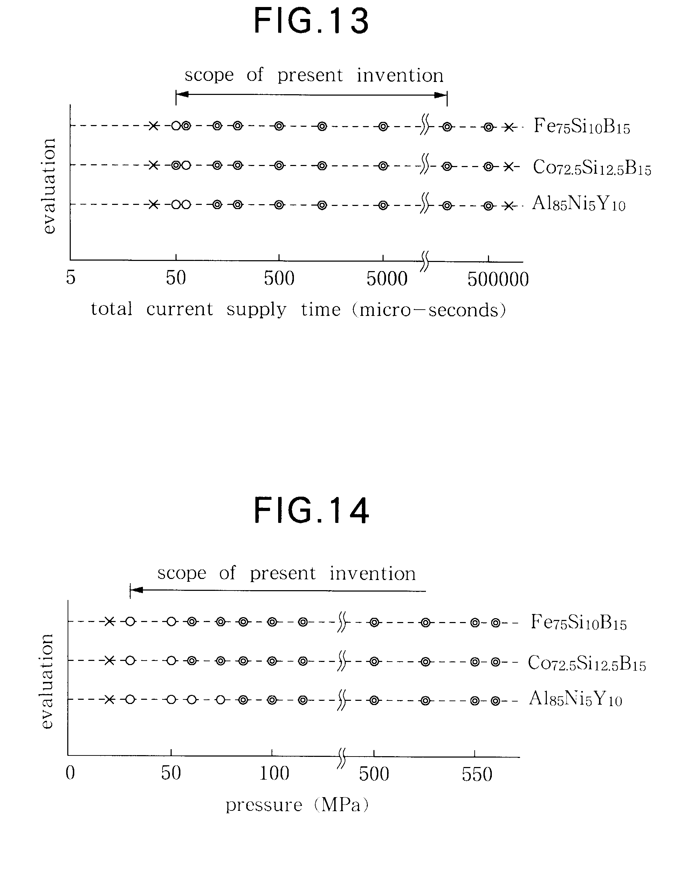

The results are shown in Fig. 13. It is noted from Fig. 13 that the bulky body having high density and high strength was obtained when the total current-supply time was controlled within the range of from 50 micro-seconds to 500 milli-seconds.

### Example 10:

The same amorphous alloy ribbons as those in Example 7 were joined under the various applied pressure to search the effect of the pressure on the relative density of the obtained bulky body. In this example, the other conditions were held at the constant values, i.e. the maximum current density of 5 kA/cm², the frequency of 5 kHz and the total current-supply time of 800 micro-seconds.

The results are shown in Fig. 14. It is noted from Fig. 14 that the bulky body having high density and high strength was obtained when the pressure of 30 MPa or more was applied to the amorphous alloy ribbons.

### Example 11:

Fe-base, Co-base and Al-base amorphous alloy ribbons, to which various elements had been added to adjust compositions, having thickness in the range of 25-75 µm were used in this example. The amorphous alloy ribbons were held under the pressure of 200 MPa and joined by supplying an electric current having the frequency of 5 kHz with the maximum current density of 8 kA/cm² for the total current-supply time of 700 micro-seconds.

The amorphous state and the relative density of each obtained bulky body were examined. The results are shown in Table 3, wherein the bulky bodies were evaluated in the same way as that in Example 7. It is noted from Table 3 that the high-density bulky body was obtained from the amorphous alloy having any type or any composition without destroying the amorphous structure.

**Table 3:**

| EVALUATION OF VARIOUS KINDS OF OBTAINED AMORPHOUS BULKY BODIES | | | |
|---|---|---|---|
| ALLOY-TYPE (at.%) | EVALUATION | ALLOY-TYPE (at.%) | EVALUATION |
| Fe-base | | Co-base | |
| Fe₇₅Si₁₀B₁₅ | ⓞ | Co₈₅B₁₅ | ⓞ |
| Fe₆₅Si₂₅B₁₀ | ⓞ | Co₈₅Zr₁₅ | ○ |
| Fe₆₅Si₁₀B₂₅ | ⓞ | Co_{72.5}Si_{12.5}B ₁₅ | ⓞ |
| Fe₇₅Si₁₉B₁₃C₃ | ○ | Co₇₅Si₁₅B ₁₀ | ⓞ |
| Fe₇₀Si₁₀B₁₅Cr₅ | ○ | Co₇₄Fe₆B₂₀ | ○ |
| Fe₈₅B₁₃C ₂ | ○ | Co_{70.5}Fe_{4.5}Si₁₀B ₁₅ | ⓞ |
| Fe₇₇P₁₃C₁₀ | ⓞ | Co_{65.7}Fe_{4.3}Si₁₇B₁₃ | ⓞ |
| Fe₆₉Cr₈P₁₃C₁₀ | ○ | Co₆₆Fe₄Ni₁Si₁₄B₁₅ | ⓞ |
| Fe_{73.5}Si_{13.5}B₉Cu₁Nb₃ | ○ | | |
| Fe₈₅Zr₈B₆Cu₁ | ○ | | |

| Al-base | | | |
|---|---|---|---|
| Al₉₀Y₁₀ | ⓞ | Al₈₅Ni₅Y₁₀ | ⓞ |
| Al₈₀Cu₁₀Ce₁₀ | ○ | Al₈₀Co₁₀Ce₁₀ | ⓞ |
| Al₉₀Fe₅Ce₅ | ○ | Al₈₈Ni₇Co₅ | ○ |
| Al₈₅Zr₅Ni₁₀ | ⓞ | | |

The bulky body prepared by joining amorphous alloy ribbons has the structure that adjacent ribbons are joined together through melted parts which exist uniformly in lamination boundaries, while oxide films remain at the lamination boundaries other than the melted parts. Due to this peculiar structure, the joined body has high density and high bonding strength,and the excellent magnetic properties of the amorphous alloy ribbon itself are maintained in the joined body.

The various kinds of amorphous alloy ribbons were joined together and formed to a bulky body by the supply of a high-frequency current under specified conditions. Thus, the bulky body keeping the excellent properties of the starting amorphous alloy can be manufactured with high productivity at a low cost.

The bulky body obtained in this way is useful as electronic parts such as a core, noise filter or choking coil, or high -functional parts for a power transformer, due to its excellent magnetic properties. The bulky body may be also used as higly corrosion -resistance parts, high-strength parts or ornaments in various industrial fields, since it has high strength and excellent corrosion resistance.

## Claims

1. A method of bonding amorphous alloy ribbons comprising:
- applying a pressure of 30 MPa or higher to amorphous alloy ribbons, and
- supplying an alternating current at least once under the conditions of a maximum current density of 1-100 kA/cm², a frequency of 1 kHz or more and where the current is supplied for a time given by the range of from 50 micro-seconds to 500 milli-seconds.

## Patentansprüche

1. Verfahren zum Verbinden amorpher Legierungsbänder umfassend:
- Aufbringen eines Drucks von 30 MPa oder höher auf amorphe Legierungsbänder und
- mindestens einmaliges Zuführen eines Wechselstroms unter den Bedingungen einer maximalen Stromdichte von 1-100 kA/cm², einer Frequenz von 1 kHz oder mehr, und wobei der Strom für einen Zeitraum im Bereich von 50 micro-Sekunden bis 500 milli-Sekunden zugeführt wird.

## Revendications

1. Procédé pour lier des rubans d'alliage amorphe comprenant :
- le fait d'appliquer une pression de 30 MPa ou plus à des rubans d'alliage amorphe, et
- le fait d'alimenter en courant alternatif au moins une fois dans les conditions d'une densité de courant maximale de 1 à 100 kA/cm², d'une fréquence de 1 kHz ou plus et où on alimente en courant pendant un temps donné se situant dans l'intervalle allant de 50 µs à 500 ms.
